(19) Europäisches Patentamt
European Patent Office
Office européen des brevets

(11) **EP 3 469 688 B1**

(12) **EUROPÄISCHE PATENTSCHRIFT**

(45) Veröffentlichungstag und Bekanntmachung des Hinweises auf die Patenterteilung:
**21.10.2020  Patentblatt 2020/43**

(21) Anmeldenummer: **17749154.5**

(22) Anmeldetag: **26.07.2017**

(51) Int Cl.:
**H02K 1/24** *(2006.01)*

(86) Internationale Anmeldenummer:
**PCT/EP2017/068877**

(87) Internationale Veröffentlichungsnummer:
**WO 2018/024573 (08.02.2018 Gazette 2018/06)**

(54) **ELEKTRISCHE MASCHINE MIT TEILWICKLUNGEN UND RELUKTANZMOMENT**

ELECTRIC MACHINE WITH PARTIAL WINDINGS AND RELUCTANCE TORQUE

MACHINE ELECTRIQUE COMPRENANT DES ENROULEMENTS PARTIELS ET MOMENT DE RELUCTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2016  EP 16182760**

(43) Veröffentlichungstag der Anmeldung:
**17.04.2019  Patentblatt 2019/16**

(73) Patentinhaber: **Siemens Aktiengesellschaft
80333 München (DE)**

(72) Erfinder:
• **CERNY, Marco
97720 Nüdlingen (DE)**
• **MÜLLER, Michael
97688 Bad Kissingen (DE)**
• **RETTINGER, Frank
97616 Bad Neustadt (DE)**

(56) Entgegenhaltungen:
**EP-A1- 0 018 835     EP-A2- 2 180 580
EP-B1- 0 557 809     DE-A1-102013 103 665**

**Beschreibung**

Die vorliegende Erfindung betrifft eine elektrische Maschine mit einem Stator und einem Rotor, wobei der Stator eine mehrphasige Wicklung mit einer ersten Teilwicklung und einer zweiten Teilwicklung aufweist, wobei die zweite Teilwicklung eine Mehrzahl von zweiten Teilwicklungssträngen aufweist, welche in Polygonschaltung verbunden sind, und die erste Teilwicklung eine Mehrzahl von Teilwicklungssträngen aufweist, welche in Sternschaltung verbunden sind oder sternartig mit der Polygonschaltung der zweiten Teilwicklungsstränge verbunden sind.

Das Interesse richtet sich vorliegend auf elektrische Maschinen, welche beispielsweise als Antrieb in einem Elektrofahrzeug eingesetzt werden können. Bei solchen elektrischen Maschinen ist es erforderlich, dass ein hoher Wirkungsgrad bereitgestellt wird, um einen effizienten Betrieb des Elektrofahrzeugs zu ermöglichen. Die elektrische Maschine umfasst einen Stator und einen Rotor, welcher relativ zu dem Stator bewegt werden kann. Der Stator weist eine Wicklung bzw. Motorwicklung auf, welche wiederum mehrere Stränge umfassen kann. Dabei kann jeder Strang einer Phase zugeordnet sein. Des Weiteren weist der Stator eine Mehrzahl von Nuten auf, in welche Teile der Wicklung eingebracht sind.

Aus dem Stand der Technik sind Ausführungen bekannt, bei denen die Motorwicklung sechssträngig ausgebildet ist. Dies bedeutet, dass die elektrische Maschine sechs Anschlussleitungen aufweist, wobei die jeweilige Phasenverschiebung zwischen den Anschlussleitungen 60° beträgt. Somit kann eine Feldverteilung in dem Luftspalt erreicht werden, welche einer Sinusform ähnelt. Dies führt insbesondere dazu, dass die fünfte und die siebte Oberwelle gedämpft werden. Darüber hinaus wird der Grundwellenwicklungsfaktor im Vergleich zu einer dreisträngigen Wicklung um ca. 3% erhöht. Dies führt zu einer Verbesserung des Verhältnisses von Drehmomentzustrom und damit zu einer Erhöhung des Leistungsfaktors und des Wirkungsgrades.

In diesem Zusammenhang beschreibt die EP 0 557 809 B1 eine mehrphasige Wicklung für eine elektrische Maschine, welche einen ersten Wicklungsteil, dessen Teilwicklungszweige bzw. Teilwicklungsstränge in Polygon geschaltet sind, sowie einen zweiten Wicklungszweig, dessen Wicklungszweige jeweils um einen elektrischen Winkel phasenversetzt angeordnet und sternartig an den ersten Wicklungsteil angeschlossen sind. Dabei entspricht die Zahl der Wicklungszweige beider Wicklungsteile jeweils der Phasenzahl. Durch eine derartige Wicklung können störende Durchflutungsoberwellen, Oberschwingungsströme und parasitäre Effekte, wie beispielsweise Pendelmomente, magnetische Geräusche oder Zusatzverluste, verringert werden.

Des Weiteren beschreibt die DE 10 2013 103 665 A1 eine elektrische Maschine umfassend einen Stator und einen relativ zum Stator beweglichen Rotor, der eine Polpaarzahl p aufweist. Der Stator umfasst eine erste mehrsträngige Wicklung und zumindest eine zweite mehrsträngige Wicklung, wobei die erste mehrsträngige Wicklung eine erste und eine zweite Teilwicklung umfasst, die zueinander mechanisch verschoben sind. Die zweite mehrsträngige Wicklung umfasst eine erste und eine zweite Teilwicklung umfasst, die zueinander mechanisch verschoben sind. In einer Nut des Stators ist jeweils eine Anzahl von Windungen der ersten Teilwicklung einer mehrsträngigen Wicklung verschieden von einer Anzahl von Windungen der zweiten Teilwicklung dieser mehrsträngigen Wicklung. Der Rotor der elektrischen Maschine kann ein Permanentmagnetrotor, ein Rotor mit vergrabenen Magneten oder ein Synchron-Reluktanzrotor sein.

Es ist Aufgabe der vorliegenden Erfindung, eine Lösung aufzuzeigen, wie eine elektrische Maschine mit mehreren Wicklungszweigen bzw. Wicklungssträngen effizienter betrieben werden kann.

Diese Aufgabe wird erfindungsgemäß durch eine elektrische Maschine mit den Merkmalen gemäß Patentanspruch 1 gelöst. Vorteilhafte Weiterbildungen der vorliegenden Erfindung sind Gegenstand der abhängigen Patentansprüche.

Eine erfindungsgemäße elektrische Maschine umfasst einen Stator und einen Rotor. Dabei weist der Stator eine mehrphasige Wicklung mit einer ersten Teilwicklung und einer zweiten Teilwicklung auf. Die zweite Teilwicklung weist eine Mehrzahl von zweiten Teilwicklungssträngen auf, welche in Polygonschaltung verbunden sind. Die erste Teilwicklung weist eine Mehrzahl von ersten Teilwicklungssträngen auf, welche in Sternschaltung verbunden sind oder sternartig mit der Polygonschaltung der zweiten Teilwicklungsstränge verbunden ist. Dabei ist die elektrische Maschine derart ausgebildet, dass ein auf den Rotor wirkendes Drehmoment zumindest teilweise von einer Reluktanzkraft bewirkt ist. Zudem umfasst jeder der ersten Teilwicklungsstränge mehrere parallele Zweige und jeder der zweiten Teilwicklungsstränge umfasst mehrere parallele Zweige, wobei eine Windungszahl in den ersten Teilwicklungssträngen identisch ist und eine Windungszahl in den zweiten Teilwicklungssträngen identisch ist.

Die elektrische Maschine kann beispielsweise als Antrieb in einem Elektrofahrzeug verwendet werden. Die elektrische Maschine mit einer bestimmten Polpaarzahl umfasst den Stator und den Rotor, welcher relativ zu dem Stator bewegt bzw. gedreht werden kann. Der Stator kann beispielsweise einen Statorträger umfassen, welcher aus einem Elektroblech gebildet ist. Der Stator bzw. der Statorträger kann eine Mehrzahl von Nuten aufweisen, welche sich jeweils im Wesentlichen entlang der radialen Richtung des Stators bzw. der elektrischen Maschine erstrecken. Ferner kann der Stator eine Wicklung bzw. Motorwicklung aufweisen, wobei Teile der Wicklung in die Nuten des Stators eingebracht sind. Die Anzahl der Nuten die pro Pol und Strang bewickelt wird, ist als Lochzahl bekannt. Die Wicklung ist zum Betrieb an einem m-phasigen Drehstromsystem ausgebildet. Die Wicklung besteht aus der ersten Teilwicklung und der zweiten Teilwicklung. Die erste Teilwicklung ist jeweils aus m ersten Teilwicklungssträngen aufgebaut und die zweite Teilwicklung ist ebenso aus m zweiten Teilwicklungssträngen aufgebaut. Ferner wird auch die erste Lochzahl für die erste Teilwicklung und die zweite Lochzahl für die zweite Teilwicklung unterschieden. Die Summe von erster Lochzahl der ersten Teilwicklung und zweiter Lochzahl der zweiten Teilwicklung ergibt die Lochzahl pro Pol und Strang, wobei die Lochzahl pro Pol und Strang zur Ausführbarkeit größer oder gleich zwei ist.

Die Wicklung des Stators wird durch das Verbinden der ersten Teilwicklung mit der zweiten Teilwicklung gebildet, wobei dies durch zwei unterschiedliche Varianten vorgenommen werden kann. Die zweiten Teilwicklungsstränge der zweiten Teilwicklung sind in Polygonschaltung und insbesondere in Dreieckschaltung miteinander verbunden. Die erste Variante ist durch die Polygonschaltung aus den zweiten Teilwicklungssträngen gekennzeichnet, wobei die Enden der jeweiligen ersten Teilwicklungsstränge mit den jeweiligen zweiten Teilwicklungsanfängen bzw. Teilwicklungsenden verbunden sind, welche die Polygonschaltung bilden. Die zweite Variante ist die Polygonschaltung aus den zweiten Teilwicklungssträngen gekennzeichnet, wobei die ersten Teilwicklungsstränge in Stern geschalten sind. An den Anfängen der ersten und zweiten Teilwicklungsstränge wird das m-phasige Drehstromsystem angeschlossen. Hier sind die jeweiligen ersten Teilwicklungsstränge in einem Sternpunkt elektrisch miteinander verbunden. Durch eine derartige Ausgestaltung der Wicklung können Oberwellen reduziert werden. Zudem kann der Leistungsfaktor und der Wirkungsgrad erhöht werden.

Gemäß einem wesentlichen Aspekt der Erfindung ist es vorgesehen, dass die elektrische Maschine derart ausgebildet ist, dass ein auf den Rotor wirkendes Drehmoment zumindest teilweise von einer Reluktanzkraft bewirkt ist. Mit anderen Worten handelt es sich um eine elektrische Maschine mit einem Reluktanzmoment. Dabei kann es vorgesehen sein, dass das Drehmoment des Motors, durch gezielte magnetische Anisotropie im Rotorblechschnitt, ausschließlich durch die Reluktanzkraft erzeugt wird und nicht durch die Feldanteile aus Permanentmagneten oder Erregerwicklungen. Es kann auch vorgesehen sein, dass die elektrische Maschine ein signifikantes Reluktanzdrehmoment aufweist. Dies bedeutet, dass ein Großteil des Drehmoments des Rotors durch die Reluktanzkraft bewirkt ist und nicht durch die Feldanteile aus Permanentmagneten oder Erregerwicklungen. Versuche haben gezeigt, dass eine Wicklung, bei der erste Teilwicklungsstränge in Sternschaltung verbunden sind bzw. sternartig mit der Polygonschaltung der zweiten Teilwicklungsstränge verbunden sind und zweite Teilwicklungsstränge in Polygon- bzw. Dreieckschaltung verbunden sind, vorteilhaft in elektrischen Maschinen mit Reluktanzdrehmoment verwendet werden können. Hierbei haben Versuche gezeigt, dass der Wicklungsfaktor der Grundwelle um ca. 3% größer ist. Ferner können lokale Sättigungen in Stator und Rotor reduziert werden. Insbesondere ergibt sich eine geringere Kreuzsättigung entlang der d-Achse und der q-Achse im magnetischen Pfad. Somit kann eine bessere magnetische Leitfähigkeit erreicht werden. Dies führt dazu, dass ein ca. 4 bis 5% höheres Drehmoment mit der elektrischen Maschine erreicht werden kann. Somit kann eine elektrische Maschine bereitgestellt werden, die effizienter betrieben werden kann.

Zudem umfasst jeder der ersten Teilwicklungsstränge mehrere parallele Zweige und jeder der zweiten Teilwicklungsstränge umfasst mehrere parallele Zweige. Jeder der ersten Teilwicklungsstränge ist aus mehreren parallelen Zweigen aufgebaut, um die notwendige erste Strangwindungszahl darzustellen, wobei die Windungszahl in den ersten m Teilwicklungssträngen identisch ist. Jeder der zweiten Teilwicklungsstränge ist aus mehreren parallelen Zweigen aufgebaut, um die notwendige zweite Strangwindungszahl darzustellen, wobei die Windungszahl in den zweiten m Teilwicklungssträngen identisch ist. Die Anzahl der parallelen Zweige innerhalb der ersten und zweiten Teilwicklungsstränge können sowohl gleich als auch unterschiedlich sein, sofern hiermit ein optimales Verhältnis von erster Teilwicklungswindungszahl zu zweiter Teilwicklungswindungszahl dargestellt werden kann.

Ferner weist die erste Teilwicklung eine Mehrzahl von ersten Spulen auf, wobei eine jeweilige Windungszahl der ersten Spulen gleich ist, und die zweite Teilwicklung weist eine Mehrzahl von zweiten Spulen auf, wobei eine jeweilige Windungszahl der zweiten Spulen gleich ist. Mit anderen Worten weist jede Spule der ersten Teilwicklung die gleiche Windungszahl auf und jede Spule der zweiten Teilwicklung weist die gleiche Windungszahl auf. Dies ermöglicht eine einfache Herstellung der Wicklung.

Darüber hinaus unterscheidet sich die jeweilige Windungszahl der ersten Spulen von der jeweiligen Windungszahl der zweiten Spulen. Die Windungszahl der ersten Spulen der ersten Teilwicklung und die Windungszahl der zweiten Spulen der zweiten Teilwicklung unterscheiden sich also. Durch eine derartige Ausgestaltung der Wicklung kann ein effizienter Betrieb der elektrischen Maschine ermöglicht werden.

Bevorzugt ist die elektrische Maschine als synchrone Reluktanzmaschine oder als permanenterregte Synchronmaschine mit vergrabenen Magneten im Rotor ausgebildet. Beispielsweise kann die elektrische Maschine als Synchron-Reluktanzmotor ausgebildet sein. Hierbei weist der Rotor keine Permanentmagnete und keine elektrische Wicklung auf. Der Rotor ist in diesem Fall aus einem hochpermeablen, weichmagnetischen Material, beispielsweise einem Elektroblech, gebildet, welches ausgeprägte Pole besitzt. Alternativ dazu kann die elektrische Maschine als Synchronmaschine ausgebildet sein, bei welcher der Rotor vergrabene Magnete aufweist. Hierzu kann der Rotor, der beispielsweise aus einem Elektroblech gebildet ist, entsprechende Ausnehmungen aufweisen, in welche Permanentmagnete eingebracht sind. Somit kann auf einfache und zuverlässige Weise eine elektrische Maschine mit Reluktanzdrehmoment bereitgestellt werden.

Gemäß einer Ausführungsform sind die erste Teilwicklung und die zweite Teilwicklung sternartig geschaltet. Die jeweiligen Spulenenden der ersten Teilwicklungsstränge der ersten Teilwicklung und die jeweiligen Spulenenden bzw. Spulenanfänge der zweiten Teilwicklungsstränge der zweiten Teilwicklung können also elektrisch verbunden sein. Die jeweiligen ersten Teilwicklungsstränge der ersten Teilwicklung und die jeweiligen zweiten Teilwicklungsstränge der zweiten Teilwicklung können also elektrisch in Serie geschaltet sein. Auf diese Weise kann eine Erhöhung des Drehmoments der elektrischen Maschine erreicht werden.

Dabei ist es insbesondere vorgesehen, dass benachbarte zweite Teilwicklungsstränge jeweils an Verbindungspunkten elektrisch verbunden sind und jeweils einer der ersten Teilwicklungsstränge mit einem der Verbindungspunkte und mit einer Anschlussklemme elektrisch verbunden ist. Die zweiten Teilwicklungsstränge können in Polygonschaltung bzw. Dreieckschaltung miteinander verbunden sein. Dabei sind die jeweiligen zweiten Teilwicklungsstränge an Verbindungspunkten elektrisch miteinander verbunden. Jeder der ersten Teilwicklungsstränge ist einem Teilwicklungsende mit einem Verbindungspunkt und mit einem Teilwicklungsanfang mit einer Anschlussklemme elektrisch verbunden. An den Anschlussklemmen kann dann die Wicklung versorgt werden.

Gemäß einer alternativen Ausführungsform sind die erste Teilwicklung und die zweite Teilwicklung elektrisch parallel geschaltet. Dies bedeutet, dass die jeweiligen ersten Teilwicklungsstränge und die jeweiligen zweiten Teilwicklungsstränge direkt mit den Anschlussklemmen verbunden sind. Auch mit einer derartigen Verschaltung der Teilwicklung bzw. Teilwicklungsstränge kann eine Erhöhung des Drehmoments der elektrischen Maschine erreicht werden.

Dabei ist es insbesondere vorgesehen, dass benachbarte zweite Teilwicklungsstränge jeweils an Verbindungspunkten elektrisch verbunden sind und jeweils einer der ersten Teilwicklungsstränge mit einem der Verbindungspunkte und mit einem Sternpunkt der ersten Teilwicklungsstränge elektrisch verbunden sind. Die zweiten Teilwicklungsstränge sind in Polygonschaltung oder Dreieckschaltung miteinander an jeweiligen Verbindungspunkten verbunden. Die jeweiligen ersten Teilwicklungsstränge sind einerseits mit dem Sternpunkt und andererseits mit einem der Verbindungspunkte elektrisch miteinander verbunden. Dies ermöglicht eine einfache Verschaltung der Teilwicklungsstränge.

Gemäß einer nicht beanspruchten Ausführungsform weist der Stator eine Mehrzahl von Nuten mit einer geraden Anzahl auf und eine Anzahl von Nuten, in denen die erste Teilwicklung angeordnet ist, entspricht einer Anzahl von Nuten, in denen die zweite Teilwicklung angeordnet ist. Dies bedeutet, dass die Aufteilung der Nuten auf die erste Teilwicklung und die zweite Teilwicklung gleich ist, wenn die Lochzahl geradzahlig ist. Damit sind die erste Lochzahl für die erste Teilwicklung und die zweite Lochzahl für die zweite Teilwicklung identisch. Auf diese Weise kann eine gleichmäßige Feldverteilung im Luftspalt erreicht werden. Dies ermöglicht eine effektive Dämpfung von Oberwellen.

Zudem weist der Stator eine Mehrzahl von Nuten mit einer ungeraden Anzahl auf und eine Anzahl von Nuten, in denen die erste Teilwicklung angeordnet ist, unterscheidet sich von einer Anzahl von Nuten, in denen die zweite Teilwicklung angeordnet ist, um eine Nut. Bei einer ungeradzahligen Lochzahl kann die Anzahl der Nuten, in denen die erste Teilwicklung angeordnet ist um meine Nut höher oder niedriger sein als die Anzahl der Nuten, in denen die zweite Teilwicklung angeordnet ist. Dies bedeutet, dass sich die erste Lochzahl für die erste Teilwicklung und die zweite Lochzahl für die zweite Teilwicklung um eins unterscheiden. Somit kann auch bei einer ungeradzahligen Lochzahl pro Pol und Strang eine möglichst gleichmäßige Feldverteilung im Luftspalt ermöglicht werden.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:

FIG 1    eine schematische Darstellung einer elektrischen Maschine in einer geschnittenen Seitenansicht;

FIG 2    eine schematische Darstellung eines Rotorblechschnittes eines Synchronreluktanzmotors;

FIG 3    eine Verschaltung von ersten Teilwicklungen und zweiten Teilwicklungen einer Wicklung der elektrischen Maschine gemäß einer ersten Ausführungsform;

FIG 4    ein inneres Schaltbild der ersten Teilwicklung;

FIG 5    eine Verschaltung der ersten Teilwicklung zweiten Teilwicklungen gemäß einer weiteren Ausführungsform; und

FIG 6    ein inneres Schaltbild der zweiten Teilwicklung.

In den Figuren werden gleiche und funktionsgleiche Elemente mit den gleichen Bezugszeichen versehen.

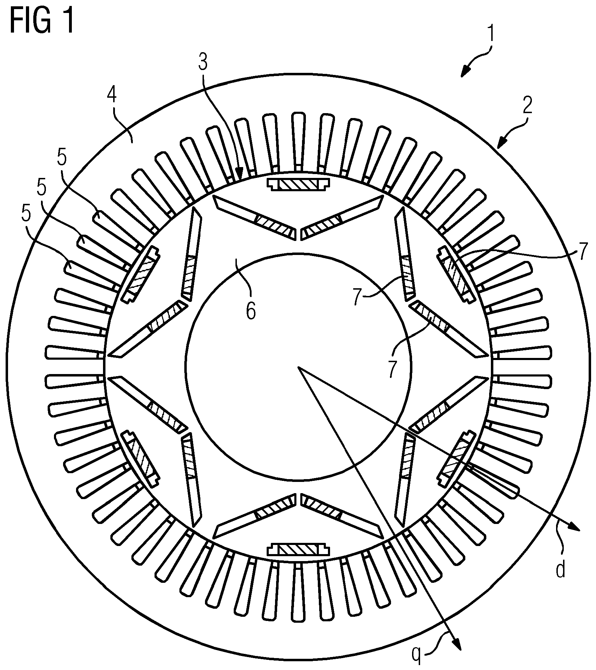

FIG 1 zeigt eine elektrische Maschine 1 in einer geschnittenen Seitenansicht. Die elektrische Maschine 1 ist zum Betrieb an einem 3-phasigen Netz ausgebildet. Die elektrische Maschine 1 umfasst einen Stator 2 sowie einen Rotor 3, der relativ zum Stator 2 drehbar ist. Der Stator 2 umfasst einen Statorkörper 4 welcher beispielsweise aus einem Elektroblech gebildet sein kann. Der Stator 2 umfasst ferner eine Mehrzahl von Nuten 5, welche sich entlang einer radialen Richtung der elektrischen Maschine 1 erstrecken. Der Rotor 3 umfasst einen Rotorkörper 6, welcher ebenfalls aus einem Elektroblech gebildet sein kann. Darüber hinaus umfasst der Rotor 3 eine Mehrzahl von Permanentmagneten 7, welche vergraben in dem Rotor angeordnet sind. Dies bedeutet, dass das Elektroblech bzw. der Rotorkörper 6 entsprechende Ausnehmungen aufweisen kann, in welche die Permanentmagneten 7 eingebracht sind.

Bei der elektrischen Maschine 1 wird ein auf den Rotor 3 wirkendes Drehmoment zumindest teilweise von einer Reluktanzkraft bewirkt. Dies wird durch gezielte magnetische Anisotropie im Rotorblechschnitt bzw. durch einen Unterschied in den magnetischen Leitwerten zwischen d-Achse und q-Achse dargestellt.

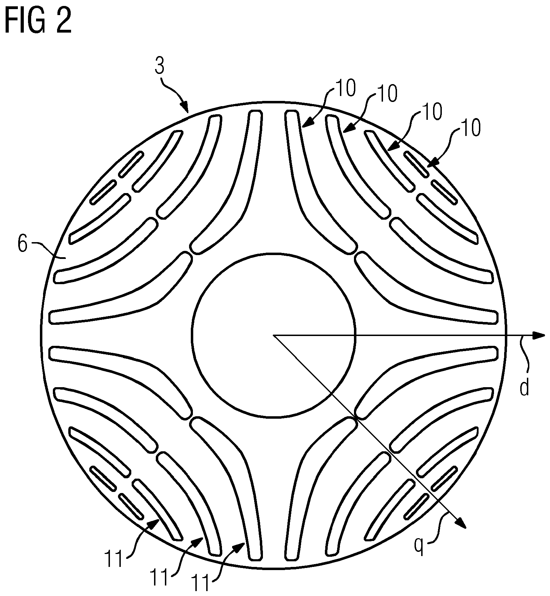

Es kann auch vorgesehen sein, dass die elektrische Maschine 1 als synchrone Reluktanzmaschine ausgebildet ist. Hierzu zeigt FIG 2 eine schematische Darstellung eines Rotors 3 einer Reluktanzmaschine. Der Rotor 3 umfasst magnetische Flusssperren 10 sowie magnetische Leitflächen 11.

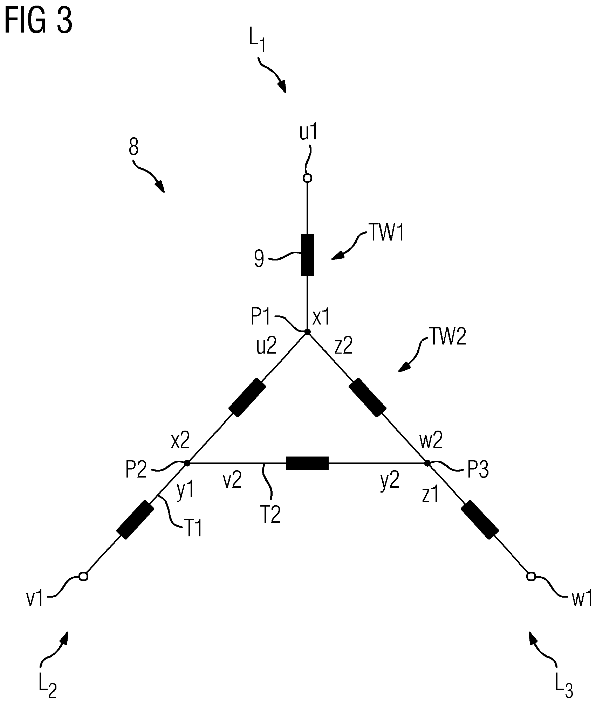

FIG 3 zeigt ein Schaltbild einer Wicklung 8 der elektrischen Maschine 1 gemäß einer ersten Ausführungsform. Die Wicklung 8 umfasst eine erste Teilwicklung TW1 und eine zweite Teilwicklung TW2. Vorliegend sind die erste Teilwicklung TW1 und die zweite Teilwicklung TW2 seriell miteinander verbunden. Die erste Teilwicklung TW1 umfasst mehrere erste Teilwicklungsstränge T1. Vorliegend umfasst die erste Teilwicklung TW1 drei erste Teilwicklungsstränge T1. Ferner umfasst die zweite Teilwicklung TW2 eine Mehrzahl von zweiten Teilwicklungssträngen T2. Vorliegend umfasst die zweite Teilwicklung TW2 drei zweite Teilwicklungsstränge T2.

Dabei sind die ersten Teilwicklungssträngen T1 sternartig mit einer Polygonschaltung der zweiten Teilwicklungsstränge T2 verbunden. Aus diesem Grund wird diese Variante auch als Serienschaltung bezeichnet. Dabei sind jeweils zwei zweite Teilwicklungsstränge T2 mit den jeweiligen Teilwicklungsstranganfängen u2, w2, v2 und Teilwicklungsstrangenden y2, x2, z2 an jeweiligen Verbindungspunkten P1, P3 und P3 miteinander verbunden. Jeweils ein erster Teilwicklungsstrang T1 ist einerseits mit seinem jeweiligen Teilwicklungsstrangenden y1, x1, z1 an einem der Verbindungspunkte P1, P2, P3 und mit jeweils einem Teilwicklungsstranganfängen u1, v1, w1 an einer Anschlussklemme L1, L2 oder L3 verbunden.

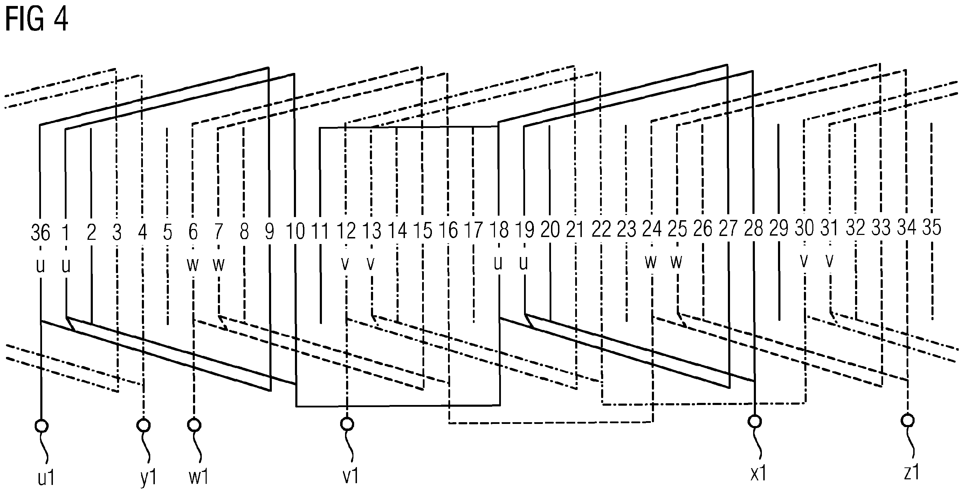

FIG 4 zeigt eine 4-polige Anordnung der Wicklung 8 der Teilwicklung TW1 in den jeweiligen Nuten 5 mit den jeweiligen Teilwicklungsstranganfängen u1, w1, v1 und Teilwicklungsstrangenden x1, y1, z1.

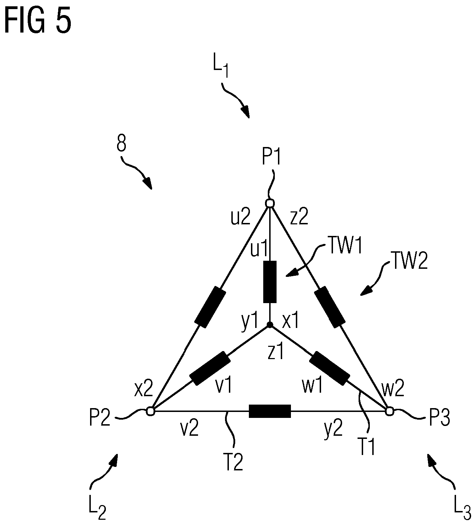

FIG 5 zeigt ein Schaltbild der Wicklung 8 gemäß einer weiteren Ausführungsform. Hierbei sind die erste Teilwicklung TW1 und die zweite Teilwicklung TW2 parallel geschaltet. Die zweiten Teilwicklungsstränge T2 sind hier ebenfalls in Polygonschaltung miteinander verbunden, wobei benachbarte zweite Teilwicklungsstränge T2 jeweils mit einem der Verbindungspunkte P1, P2 und P3 verbunden sind. Ferner sind die jeweiligen Verbindungspunkte P1, P2 und P3 mit den jeweiligen Anschlussklemmen L1, L2 und L3 verbunden. Die jeweiligen ersten Teilwicklungsstränge T1 sind in Sternschaltung miteinander verbunden. Einerseits sind die ersten Teilwicklungsstränge T1 mit einem Sternpunkt S und andererseits mit einem der Verbindungspunkte P1, P2 oder P3 verbunden.

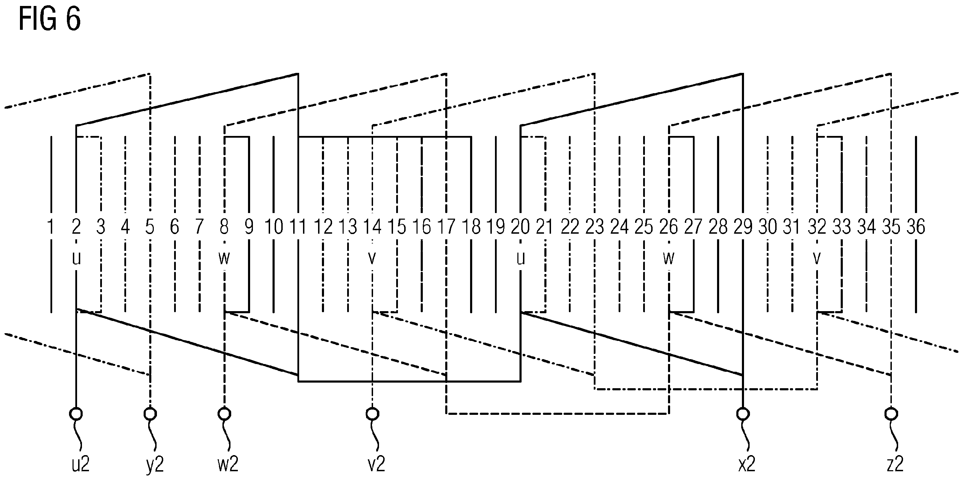

FIG 6 zeigt die 4-polige Anordnung der Wicklung 8 der Teilwicklung TW2 in den jeweiligen Nuten 5 mit den jeweiligen Teilwicklungsstranganfängen u2, w2, v2 und Teilwicklungsstrangenden x2, y2, z2.

Das innere Schaltbild der Teilwicklung TW1 gemäß FIG 4 und das innere Schaltbild der Teilwicklung TW2 gemäß FIG 6 gelten sowohl für die Verschaltung der Wicklung 8 nach FIG 3 als auch für die Verschaltung der Wicklung 8 nach FIG 5.

Die elektrische Maschine 1 weist die Polpaarzahl p auf. Die Anzahl der Nuten 5, die pro Pol und Strang bewickelt wird, ist als Lochzahl q bekannt. Dabei wird auch die erste Lochzahl $q_{TW1}$ für die erste Teilwicklung TW1 und die zweite Lochzahl $q_{TW2}$ für die zweite Teilwicklung TW2 unterschieden. Die Summe von erster Lochzahl $q_{TW1}$ der ersten Teilwicklung TW1 und zweiter Lochzahl $q_{TW2}$ der zweiten Teilwicklung TW2 ergibt die Lochzahl q pro Pol und Strang, wobei die Lochzahl q zur Ausführbarkeit größer oder gleich zwei sein muss. Dabei kann die erste Lochzahl $q_{TW1}$ für die erste Teilwicklung TW1 und die zweite Lochzahl $q_{TW2}$ für die zweite Teilwicklung TW1 identisch sein. Dies gilt für eine gerade Anzahl an Nuten 5. Alternativ dazu kann sich erste Lochzahl $q_{TW1}$ und die zweite Lochzahl $q_{TW2}$ um eins unterscheiden. Dies gilt für eine ungerade Anzahl an Nuten 5.

Zudem kann jeder der ersten Teilwicklungsstränge T1 mehrere parallele Zweige umfassen und jeder der zweiten Teilwicklungsstränge T2 kann mehrere parallele Zweige umfassen. Jeder der ersten Teilwicklungsstränge kann aus mehreren parallelen Zweigen $a_{TW1}$ aufgebaut sein, um die notwendige erste Strangwindungszahl $w_{TW1}$ darzustellen, wobei die Windungszahl in den ersten m Teilwicklungssträngen T1 identisch ist. Jeder der zweiten Teilwicklungsstränge T2 kann aus mehreren parallelen Zweigen $a_{TW2}$ aufgebaut sein, um die notwendige zweite Strangwindungszahl $a_{TW2}$ darzustellen, wobei die Windungszahl in den zweiten m Teilwicklungssträngen T2 identisch ist. Die Anzahl der parallelen Zweige innerhalb der ersten und zweiten Teilwicklungsstränge T1, T2 können sowohl gleich als auch unterschiedlich sein, sofern hiermit ein optimales Verhältnis von erster Teilwicklungswindungszahl zu zweiter Teil-

wicklungswindungszahl dargestellt werden kann:

$$wTW1 = zTW1 * qTW1 *p / aTW1,$$

$$wTW2 = zTW2 * qTW2 *p / aTW2.$$

Durch die Ausgestaltung der Wicklung 8 und insbesondere durch die Aufteilung der Wicklung 8 in die Teilwicklungen TW1 und TW2 können lokale Sättigungen in dem Rotor 3 reduziert werden. Damit kann die magnetische Leitfähigkeit in dem Rotor 3 erhöht werden. Dies führt dazu, dass das Drehmoment der elektrischen Maschine 1 erhöht werden kann. Dies gilt sowohl für den Fall, dass die erste Teilwicklung TW1 und die zweite Teilwicklung TW2 in Serie geschaltet sind als auch für den Fall, dass die erste Teilwicklung TW1 und die zweite Teilwicklung TW2 parallel geschaltet sind.

## Patentansprüche

1. Elektrische Maschine (1) mit einem Stator (2) und einem Rotor (3), wobei der Stator (2) eine mehrphasige Wicklung (8) mit einer ersten Teilwicklung (TW1) und einer zweiten Teilwicklung (TW2) aufweist, wobei die zweite Teilwicklung (TW2) eine Mehrzahl von zweiten Teilwicklungssträngen (T2) aufweist, welche in Polygonschaltung verbunden sind, und die erste Teilwicklung (TW1) eine Mehrzahl von ersten Teilwicklungssträngen (T1) aufweist, welche in Sternschaltung oder sternartig mit der Polygonschaltung der zweiten Teilwicklungsstränge (T2) verbunden : sind wobei die elektrische Maschine (1) derart ausgebildet ist, dass ein auf den Rotor (3) wirkendes Drehmoment zumindest teilweise von einer Reluktanzkraft bewirkt ist, **dadurch gekennzeichnet, dass** jeder der ersten Teilwicklungsstränge (T1) mehrere parallele Zweige umfasst und jeder der zweiten Teilwicklungsstränge (T2) mehrere parallele Zweige umfasst, wobei eine Windungszahl in den ersten Teilwicklungssträngen (T1) identisch ist und eine Windungszahl in den zweiten Teilwicklungssträngen (T2) identisch ist, wobei die erste Teilwicklung (TW1) eine Mehrzahl von ersten Spulen (9) aufweist, wobei eine jeweilige Windungszahl der ersten Spulen (9) gleich ist, und die zweite Teilwicklung eine Mehrzahl von zweiten Spulen (9) aufweist, wobei eine jeweilige Windungszahl der zweiten Spulen (9) gleich ist und wobei sich die jeweilige Windungszahl der ersten Spulen (9) von der jeweiligen Windungszahl der zweiten Spulen (9) unterscheidet und wobei der Stator (2) eine Mehrzahl von Nuten (5) mit einer ungeraden Anzahl ausweist und sich eine Anzahl von Nuten (5), in denen die erste Teilwicklung (TW1) angeordnet ist, von einer Anzahl von Nuten (5), in denen die zweite Teilwicklung (TW2) angeordnet ist, um eine Nut (5) unterscheidet.

2. Elektrische Maschine (1) nach Anspruch 1, **dadurch gekennzeichnet , dass** die elektrische Maschine (1) als synchrone Reluktanzmaschine oder als permanenterregte Synchronmaschine mit vergrabenen Permanentmagneten (7) im Rotor (3) ausgebildet ist.

3. Elektrische Maschine (1) nach Anspruch 1 oder 2, **dadurch gekennzeichnet , dass** die erste Teilwicklung (TW1) und die zweite Teilwicklung (TW2) sternartig geschaltet sind, wobei benachbarte zweite Teilwicklungsstränge (T2) jeweils an Verbindungspunkten (P1, P2, P3) elektrisch verbunden sind und jeweils einer der ersten Teilwicklungsstränge (T1) mit einem der Verbindungspunkte (P1,P2,P3) und mit einer Anschlussklemme (L1, L2, L3) elektrisch verbinden ist.

4. Elektrische Maschine (1) nach Anspruch 1 oder 2, **dadurch gekennzeichnet , dass** die erste Teilwicklung (TW1) und die zweite Teilwicklung (TW2) elektrisch parallel geschaltet sind.

5. Elektrische Maschine (1) nach Anspruch 4, **dadurch gekennzeichnet , dass** benachbarte zweite Teilwicklungsstränge (T2) jeweils an Verbindungspunkten (P1,P2, P3) elektrisch verbunden sind und jeweils einer der ersten Teilwicklungsstränge (T1) mit einem der Verbindungspunkte (P1, P2, P3) und mit einem Sternpunkt (S) der ersten Teilwicklungsstränge (T1) elektrisch verbunden ist.

## Claims

1. Electric machine (1) having a stator (2) and a rotor (3), wherein the stator (2) has a multi-phase winding (8) with a first partial winding (TW1) and a second partial winding (TW2), wherein the second partial winding (TW2) has a plurality of second partial winding strands (T2) which are connected in a polygon circuit, and the first partial winding (TW1) has a plurality of first partial winding strands (T1) which are connected in a star circuit or in a star-like manner to the polygon circuit of the second partial winding strands (T2), wherein the electric machine (1) is embodied such that a torque acting on the rotor (3) is caused at least partly by a reluctance force, **characterised in that** each of the first partial winding strands (TI) comprises multiple parallel branches and each of the second partial winding strands (T2) comprises multiple parallel branches, wherein a number of turns in the first partial winding strands (TI) is identical and a number of turns in the second partial winding strands (T2) is identical, wherein the first partial winding (TW1) has a plurality of first coils (9), wherein a respective number of turns of the first coils (9) is the same, and the second partial winding has a plurality of second coils (9), wherein a respective number of turns of the second coils (9) is the same and wherein the respective number of turns of the first coils (9) differs from the respective number of turns of the second coils (9) and wherein the stator (2) has a plurality of slots (5) with an uneven number, and a number of slots (5) in which the first partial winding (TW1) is arranged differs from a number of slots (5) in which the second partial winding (TW2) is arranged by one slot (5).

2. Electric machine (1) according to claim 1, **characterised in that** the electric machine (1) is embodied as a synchronous reluctance machine or as a permanent-magnet synchronous machine with buried permanent magnets (7) in the rotor (3).

3. Electric machine (1) according to claim 1 or 2, **characterised in that** the first partial winding (TW1) and the second partial winding (TW2) are connected in a star-like manner, wherein adjacent second partial winding strands (T2) are each electrically connected at connection points (P1, P2, P3) and one of the first partial winding strands (T1) is connected to one of the connecting points (P1, P2, P3) in each case and is electrically connected to a connection terminal (L1, L2, L3).

4. Electric machine (1) according to claim 1 or 2, **characterised in that** the first partial winding (TW1) and the second partial winding (TW2) are electrically connected in parallel.

5. Electric machine (1) according to claim 4, **characterised in that** adjacent second partial winding strands (T2) are each electrically connected at connection points (P1, P2, P3) and one of the first partial winding strands (TI) is connected to one of the connection points (P1, P2, P3) in each case and is electrically connected to a star point (S) of the first partial winding strands (TI).

**Revendications**

1. Machine (1) électrique ayant un stator (2) et un rotor (3), le stator (2) ayant un enroulement (8) polyphasé, ayant un premier enroulement (TW1) partiel et un deuxième enroulement (TW2) partiel, le deuxième enroulement (TW2) partiel ayant une pluralité de deuxièmes brins (T2) d'enroulement partiel, qui sont reliés suivant un montage en polygone, et le premier enroulement (TW1) partiel a une pluralité de premiers brins (T1) d'enroulement partiel, qui sont reliés suivant un montage en étoile ou de type en étoile avec le montage en polygone des deuxièmes brins d'enroulement (T2) partiel,

la machine (1) électrique étant constituée de manière à ce qu'un couple, s'appliquant au rotor (3), soit provoqué, en partie au moins, par une force de réluctance, **caractérisée en ce que** chacun des premiers brins (T1) d'enroulement partiel comprend plusieurs branches parallèles et chacun des deuxièmes brins (T2) d'enroulement partiel comprend plusieurs brins parallèles, le nombre de spires dans les premiers brins (T1) d'enroulement partiel étant le même et le nombre de spires dans les deuxièmes brins (T2) d'enroulement partiel étant le même, dans laquelle le premier enroulement (TW1) partiel a une pluralité de premières bobines (9), le nombre de spires respectifs des premières bobines (9) étant le même, et le deuxième enroulement partiel a une pluralité de deuxièmes bobines (9), le nombre de spires respectif des deuxièmes bobines 9 étant le même, et le nombre de spires respectif des premières bobines (9) étant différent du nombre de spires respectif des deuxièmes bobines (9) et le stator (2) a une pluralité d'encoches (5) en un nombre impair et un nombre d'encoches, dans lesquelles le premier enroulement (TW1) partiel est disposé, est différent d'un nombre d'encoches (5), dans lesquelles le deuxième enroulement (TW2) partiel, d'une encoche (5).

2. Machine (1) électrique suivant la revendication 1, **caractérisée en ce que** la machine (1) électrique est constituée en machine à réluctance synchrone ou en machine synchrone à excitation permanente avec un aimant (7) permanent enfoui dans le rotor (3).

3. Machine (1) électrique suivant la revendication 1 ou 2, **caractérisée en ce que** le premier enroulement (TW1) partiel et le deuxième enroulement (TW2) partiel sont montés en étant de type en étoile, des deuxièmes brins (T2) d'enroulement partiel voisins étant reliés électriquement, respectivement, en des points (P1, P2, P3) de liaison et, respectivement, l'un des premiers brins (T1) d'enroulement partiel étant relié électriquement à l'un des points (P1, P2, P3) de liaison et à une borne (L1, L2, L3) de connexion.

4. Machine (1) électrique suivant la revendication 1 ou 2, **caractérisée en ce que** le premier enroulement (TW1) partiel et le deuxième enroulement (TW2) partiel sont montés en parallèle électriquement.

5. Machine (1) électrique suivant la revendication 4, **caractérisée en ce que** des deuxièmes brins (T2) d'enroulement partiel sont reliés électriquement, respectivement, en des points (P1, P2, P3) de liaison et, respectivement, l'un des premiers brins (T1) d'enroulement partiel est relié électriquement à l'un des points (P1, P2, P3) de liaison et a un point (S) neutre des premiers brins (T1) d'enroulement partiel.

FIG 1

FIG 2

FIG 3

$L_1$

8

u1

9 TW1

P1 x1
u2 z2 TW2

x2 w2
P2 y1 v2 y2 z1 P3
T1 T2

v1 w1

$L_2$ $L_3$

FIG 4

36 1 2 3 4 5 6 7 8 9 10 11 12 13 14 15 16 17 18 19 20 21 22 23 24 25 26 27 28 29 30 31 32 33 34 35

u u w w v v u u w w v v

u1 y1 w1 v1 x1 z1

EP 3 469 688 B1

FIG 5

FIG 6

**EP 3 469 688 B1**

**IN DER BESCHREIBUNG AUFGEFÜHRTE DOKUMENTE**

**In der Beschreibung aufgeführte Patentdokumente**

- EP 0557809 B1
- DE 102013103665 A1